# DEMANDE DE BREVET EUROPEEN

(11) **EP 2 330 772 A1**
(43) Date de publication de la demande: **08.06.2011**
(21) Numéro de dépôt: 09306165.3
(22) Date de dépôt: 01.12.2009
(51) Int. Cl.: H04L 9/32

(54) **Procédé de chiffrement à clef publique sans certificat**

(71) Demandeur: Gemalto SA, 92190 Meudon (FR)
(72) Inventeur: Coron, Jean-Sébastien, 92190, Meudon (FR)
(74) Mandataire: Wlodarczyk, Lukasz Georges Kazimierz

(57) **Abrégé**

L'invention concerne un procédé de cryptographie à clef publique sans certificat, reposant sur un schéma de chiffrement à clef publique basé sur l'identité dit IBE, et sur un schéma de chiffrement à clef publique traditionnel. Afin de réduire les capacités mémoire requises par un dispositif électronique mettant en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup. L'invention concerne également un dispositif sécurisé à mémoire contrainte ainsi qu'un système électronique, mettant en oeuvre le procédé selon l'invention.

## Description

L'invention concerne un procédé de chiffrement à clef publique sans certificat, particulièrement adapté pour les dispositifs sécurisés à mémoire contrainte (en abrégé, DSMC), ainsi qu'un DSMC ou tout autre système électronique mettant en oeuvre ledit procédé.

Un procédé de chiffrement à clef publique classique tel que RSA rend possible une communication sécurisée entre deux entités sans qu'il existe au départ une clef secrète partagée entre eux. Pour cela, un des utilisateurs génère une paire de clef: une clef publique qui est rendue publique pour tout le monde et qui est utilisée pour le chiffrement, et une clef privée que le même utilisateur garde secrète et utilise pour le déchiffrement.

Un problème important que l'on rencontre lors de la mise en oeuvre d'un tel procédé de chiffrement à clef publique est celui de l'authentification des clefs publiques. En effet, l'utilisateur qui envoie un message chiffré à l'aide de la clef publique du destinataire doit être certain que cette clef publique appartient bien à ce destinataire. Pour cela, il est nécessaire d'avoir une infrastructure à clef publique, comprenant une ou plusieurs autorités qui peuvent certifier la correspondance entre une clef publique et une identité; cette autorité va donc produire un certificat qui contient sa signature du couple (clef publique, identité). Cependant, la gestion d'une infrastructure à clef publique peut s'avérer complexe dans certaines situations.

Un procédé existant permettant de se passer d'une infrastructure à clef publique consiste en l'utilisation d'un procédé de chiffrement basé sur l'identité. Avec un tel procédé, un utilisateur peut utiliser sa propre identité (par exemple son adresse email) comme clef publique; la clef privée correspondante est calculée par une autorité de confiance. Le procédé de chiffrement basé sur l'identité le plus connu est le schéma de Boneh-Franklin, publié lors de la conférence CRYPTO 2001. Depuis, d'autres procédés de chiffrement à clef publique basés sur l'identité ont été proposés; à l'heure actuelle le schéma le plus efficace et le plus sûr est le schéma de Gentry, publié à la conférence Eurocrypt 2006.

Un inconvénient important de tout procédé de chiffrement à clef publique basé sur l'identité est que l'autorité de confiance peut déchiffrer tous les messages échangés à l'intérieur du système. Si la clef maître de l'autorité de confiance est compromise, cela entraîne une remise en cause totale de la sécurité du système, puisque cette clef maître permet de calculer toutes les clefs privées des utilisateurs. Ce n'est pas le cas pour le chiffrement à clef publique traditionnel avec infrastructure à clef publique, puisque dans ce cas l'autorité de confiance n'est pas obligée de connaître les clefs privées des utilisateurs.

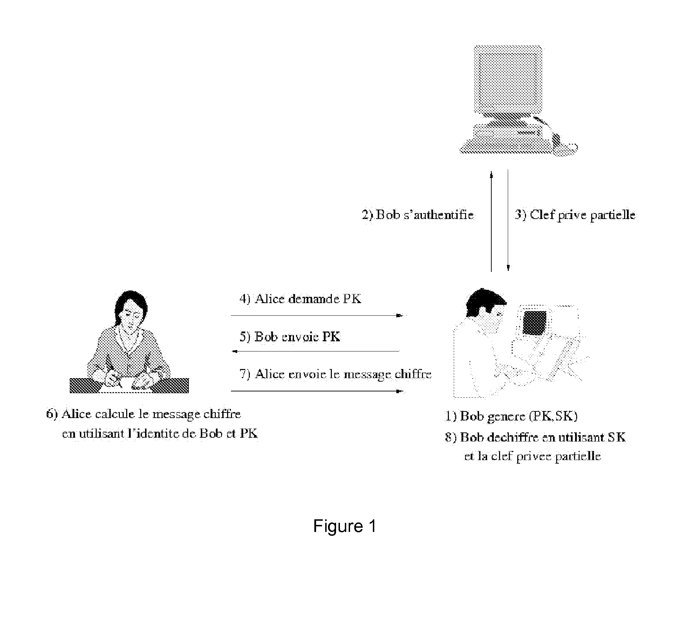

Pour éviter les inconvénients des procédés de chiffrement à clef publique traditionnels et des procédés de chiffrement à clef publique basés sur l'identité, le principe du chiffrement sans certificat a été proposé en 2003 par Al-Riyami et Paterson, lors de la conférence Asiacrypt 2003. Le procédé consiste à combiner les fonctionnalités du chiffrement à clef publique avec celles du chiffrement basé sur l'identité. Comme cela est illustré sur la Figure 1, pour chiffrer un message à destination de l'utilisateur Bob, l'utilisateur Alice demande à Bob son identité ainsi que sa clef publique. Il pourrait également les obtenir auprès d'un tiers tel que par exemple un serveur LDAP. Pour déchiffrer le message chiffré, Bob utilise alors une clef privée partielle qui lui a été donnée par l'autorité de confiance (en fonction de son identité), ainsi que la clef privée correspondant à sa clef publique.

L'intérêt du procédé de chiffrement à clef publique sans certificat est que la clef publique n'a pas besoin d'être certifiée par une autorité de confiance; en effet même si un attaquant remplace la clef publique de Bob par la sienne, cet attaquant ne peut toujours pas déchiffrer car il ne connaît pas la clef privée partielle de Bob; cela permet donc d'éviter le problème de la gestion des certificats dans le cas d'une infrastructure à clef publique traditionnelle. De plus, l'autorité de confiance ne peut pas déchiffrer les messages chiffrés, parce qu'elle ne connaît pas la clef privée de Bob; cela élimine ainsi le problème de l'autorité de confiance qui peut déchiffrer tous les messages échangés, comme c'est le cas dans un procédé de chiffrement basé sur l'identité.

Plus précisément, le principe d'un procédé de chiffrement à clef publique sans certificat est que chaque utilisateur possède deux clefs privées pour le déchiffrement: une clef privée partielle noté pskid qui lui est fournie par l'autorité de confiance, et une clef privée skid qu'il génère lui-même avec la clef publique correspondante pkid. Pour chiffrer un message à destination de l'utilisateur Bob, l'utilisateur Alice utilise la clef publique maître du système mpk, ainsi que l'identité de Bob notée id, et que la clef publique de Bob pkid. Pour déchiffrer, Bob utilise sa clef privée partielle pskid et sa clef privée skid.

Un schéma de chiffrement à clef publique sans certificat a été proposé par Huang et Wong sur l'archive eprint, rapport 2007/095, disponible à l'adresse http://eprint.iacr.org. Le schéma est basé sur trois composantes: un schéma de chiffrement à clef publique basé sur l'identité, noté IBE, un schéma de chiffrement à clef publique traditionnel noté PKE, et un schéma à signature unique noté S. Le procédé de chiffrement à clef publique sans certificat fonctionne alors de la manière suivante:
● Génération de la clef maître: l'autorité de confiance génère un couple (mpk,msk) en utilisant l'algorithme de génération de clef maître du schéma IBE. La clef mpk est rendue publique tandis que la clef msk est gardée secrète.
● Génération d'une clef privée partielle: étant donnée une identité id, l'autorité de confiance génère la clef privée partielle pskid associée à cette identité id en utilisant l'algorithme de génération de clef privée du schéma IBE.
● Génération du couple clef publique/clef privée: l'utilisateur génère un couple (pkid, skid) en utilisant l'algorithme de génération de clef du schéma PKE.
● Le chiffrement et la signature d'un message m à destination de l'identité id s'effectuent de la manière suivante (par l'émetteur du message, qui est également le signataire):
   o Génération d'un couple (vk,sk) en utilisant l'algorithme de génération de clef du schéma à signature unique S,
   o Calcul du chiffré c1 du message m | vk (le symbole | désignant la concaténation), obtenu à l'aide de l'algorithme de chiffrement du schéma IBE en utilisant l'identité id du destinataire du message,
   o Calcul du chiffré c2 du chiffré c1 (chiffrement d'un message déjà chiffré), obtenu à l'aide de l'algorithme de chiffrement PKE en utilisant la clef publique pkid du destinataire du message,
   o Calcul de la signature σ du message c2, obtenue à l'aide de l'algorithme de génération de signature du schéma S, avec la clef sk générée à la première étape,
   o Le chiffré complet à transmettre au destinataire est alors c=(c2, σ, vk), le destinataire pouvant alors déchiffrer le message et en vérifier la signature.
● Le déchiffrement et la vérification de la signature d'un chiffré c=(c2, σ, vk) s'effectuent par le détenteur de l'identité id de la manière suivante:
   o Vérification de la signature σ du message c2 à l'aide de la clef vk, avec le schéma S,
   o Déchiffrement du message chiffré c1 à partir du chiffré c2 en utilisant l'algorithme de déchiffrement du schéma PKE avec la clef secrète skid,
   o Déchiffrement du message m | vk' à partir du chiffré c1, à l'aide de l'algorithme de déchiffrement du schéma IBE, en utilisant l'identité id et la clef privée partielle pskid,
   o Vérification de la signature en s'assurant vk=vk'. Dans ce cas, le message m est considéré comme correctement signé.

Il est démontré dans le rapport 2007/095 référencé plus haut que ce schéma permet d'atteindre le plus haut niveau de sécurité pour un schéma de chiffrement à clef publique sans certificat.

Un inconvénient du procédé décrit précédemment est que la taille du message chiffré est grande par rapport au message initial. En effet, dans ce schéma, le message est d'abord chiffré à l'aide d'un schéma de type IBE; ensuite le message chiffré résultant est à nouveau chiffré en utilisant le schéma de type PKE; finalement le résultat est signé en utilisant le schéma à signature unique. Si pour le schéma de type IBE on utilise par exemple le schéma de Gentry, publié à la conférence Eurocrypt 2006, qui est le schéma de type IBE le plus efficace et le plus sûr connu actuellement, on obtient un facteur d'expansion d'environ 4. D'autre part, si pour le schéma de type PKE on utilise le schéma de Cramer-Shoup publié à la conférence Crypto 98, qui est l'un des schémas de type PKE le plus efficace et le plus sûr connu actuellement, on a aussi un facteur d'expansion d'environ 4. Ainsi, en combinant ces deux schémas, on obtient un facteur d'expansion d'environ 4*4=16, ce qui peut rendre le schéma global difficile à utiliser dans la pratique. Ceci est très gênant, notamment pour les DSMC.

L'invention a pour objet de proposer de nouveaux procédés de cryptographie à clef publique sans certificat, plus efficaces que le schéma décrit précédemment (c'est-à-dire augmentant dans une moindre mesure le volume de données). Les procédés recherchés devraient avoir un facteur d'expansion aussi petit que possible (et inférieur à 16), de manière à pouvoir aisément être mis en oeuvre sur un DSMC, tout en étant aussi sûrs. L'invention a également pour objet de proposer un nouveau type de système électronique et de DSMC mettant en oeuvre de tels procédés.

L'invention se rapporte à un système électronique mettant en oeuvre un procédé de cryptographie à clef publique sans certificat, le procédé reposant sur un schéma de chiffrement à clef publique basé sur l'identité dit IBE et sur un schéma de chiffrement à clef publique traditionnel. Dans un système électronique selon l'invention, afin de réduire les capacités mémoire requises par le système électronique pour mettre en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup.

L'invention concerne également un DSMC mettant en oeuvre un procédé de cryptographie à clef publique sans certificat, le procédé reposant sur un schéma de chiffrement à clef publique basé sur l'identité dit IBE et un schéma de chiffrement à clef publique traditionnel. Dans un DSMC selon l'invention, afin de réduire les capacités mémoire requises par le DSMC pour mettre en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup.

Un DSMC selon l'invention est un dispositif électronique, généralement portable, incorporant des fonctions cryptographiques. Un DSMC est en général petit et léger, pour pouvoir être mis dans une poche ou un portefeuille, ou pour pouvoir être aisément intégré dans un autre dispositif qui doit lui-même être aisément transportable. A titre d'exemple, la puce (circuit intégré) d'une carte à puce ne peut généralement pas dépasser une surface d'environ 5mm*5mm, car dans ce cas elle risquerait de se rompre lorsque l'utilisateur plie ou tord la carte (par exemple en s'asseyant alors que la carte est dans sa poche). Des normes définissent les amplitudes, types et fréquences des contraintes physiques qu'une carte à puce doit pouvoir supporter. La plupart du temps, un DSMC ne possède pas de source d'énergie, mais est alimenté par un hôte auquel il se connecte (il existe cependant des exceptions, telles que certains tokens OTP par exemple, qui peuvent être équipés d'un gros condensateur ou d'une batterie). L'invention s'applique de manière plus particulièrement avantageuse aux DSMC non équipés de batterie ou d'une source d'énergie quelconque, car la présence d'une batterie implique généralement un coût et une dimension plus importants, qui peuvent plus facilement justifier une capacité mémoire accrue. La contrainte mémoire des DSMC peut ainsi être due à des raisons économiques, le DSMC devant souvent coûter de l'ordre de quelques euros voire (pour les moins chers) de la dizaine de centimes d'euro. Mais la contrainte mémoire peut aussi et surtout provenir notamment de la petite taille du DSMC et de contraintes technologiques liées au fait que ledit DSMC doit être sécurisé. Le fait qu'il soit sécurisé implique souvent un certain nombre de contre-mesures physiques telles que des protections contre des attaques éventuelles (telles que des attaques de type DPA, SPA, DFA, etc.), ces protections pouvant nécessiter une surface de circuit intégré beaucoup plus importante que pour un circuit intégré fonctionnellement identique mais non protégé. La capacité mémoire d'un DSMC peut se référer à sa mémoire non volatile ou à sa mémoire vive. La quantité de mémoire non volatile et réinscriptible (souvent de type EEPROM ou Flash) d'un DSMC est généralement de l'ordre du méga octet, ou inférieure (des capacités courantes pour des cartes SIM vendues actuellement sont notamment comprises entre environ 30Ko et environ 600Ko), alors qu'un ordinateur personnel vendu actuellement dispose généralement d'au moins une centaine de giga octets de support de stockage (sous forme de disque dur), et l'on rencontre couramment des valeurs très supérieures (des disques durs de 2 téraoctets se trouvent aisément dans les magasins informatiques). L'ordre de grandeur de la capacité de stockage non volatil d'un ordinateur personnel est donc généralement de 10⁶ à 10⁷ fois plus élevé que celui d'un DSMC. La mémoire vive de DSMC se mesure en général en Ko ou au mieux en dizaines de Ko. Par exemple, un composant haut de gamme tel que le SLE88CF(X)6602P possède 24Ko de mémoire RAM, alors qu'un ordinateur personnel actuel a généralement environ 2Go de RAM. La capacité mémoire tend à croître avec le temps (progrès technologiques, loi de Moore), par exemple la capacité en mémoire non volatile et réinscriptible d'une carte SIM moyenne a été multipliée par 8 entre 1998 et 2004 (passant d'une capacité de 8Ko à 64Ko d'EEPROM), mais le rapport entre la capacité mémoire non volatile et réinscriptible des DSMC et la capacité d'un autre dispositif (par exemple taille du disque dur d'un ordinateur personnel) n'a pas substantiellement évolué au cours du temps (c'est-à-dire que les DSMC ne rattraperont a priori pas les autres dispositifs en termes de capacité mémoire). Ces dernières années, des cartes "SIM" intégrant en plus de la puce de sécurité habituelle une puce de mémoire non volatile et réinscriptible annexe (typiquement de la mémoire Flash) connectée à la puce de sécurité au sein de la "SIM" ont été prototypées. La puce mémoire annexe comprend alors une mémoire très importante comparée à celle de la SIM (à savoir de l'ordre de 128Mo à ses débuts, et désormais souvent de l'ordre de 512Mo) et n'est pas sécurisée en tant que telle (il s'agit d'une mémoire conventionnelle), mais elle est éventuellement sécurisée par la puce de sécurité (qui peut par exemple chiffrer le contenu de la mémoire annexe). Cependant, ces cartes "SIM" de grande capacité sont restées à l'état de pilotes ou de petits projets, bon nombre de personnes estimant à tort ou à raison que la SIM n'avait pas vocation à remplacer les cartes mémoires (SD, MMC, etc.), et que les capacités en mémoire non volatile et réinscriptible désormais disponibles au sein de la puce de sécurité elle-même (qui peuvent typiquement monter jusqu'à environ 1Mo) sont suffisantes, des cartes SIM de capacité inférieure (par exemple 64Ko voire 32K) étant parfois même préférées notamment pour des raisons de coût. A l'heure actuelle, la capacité en mémoire non volatile et réinscriptible des SIM est rarement mise en avant comparé à la décennie précédente, les critères de choix étant souvent autres, et l'ajout d'une puce mémoire conventionnelle annexe reste très marginal. La capacité en mémoire vive des DSMC, et en particulier des cartes à puce, a historiquement peu été mise en avant, car l'utilisateur final s'intéresse plus à ce qu'il peut stocker dedans (par exemple nombre de SMS pouvant être enregistrés dans l'EEPROM d'une carte SIM) qu'au mode opératoire du DSMC (la RAM d'une SIM n'est pas accessible à l'utilisateur de la SIM, mais seulement au système d'exploitation de la SIM, dont l'utilisateur est généralement en droit de supposer qu'il a été conçu en fonction de cette quantité de RAM et qu'il fonctionnera correctement). Cependant, lorsque l'on se trouve en présence d'un facteur d'expansion de 16 et que l'on constate que la RAM d'un DSMC dépasse rarement la dizaine de Ko, on se rend compte que le DSMC peut rencontrer des difficultés s'il cherche à encrypter des messages avec les schémas de l'état de l'art. Le DSMC peut être conduit à effectuer du swap, c'est-à-dire à libérer une partie de la mémoire vive en la transférant dans la mémoire non volatile, et en rechargeant cette partie quand il en a à nouveau besoin, mais la mémoire non volatile étant typiquement beaucoup plus lente que la mémoire vive, cela a généralement des conséquences très importantes sur les performances, et les opérations cryptographiques peuvent se trouver extrêmement ralenties.

Des exemples de DSMC comprennent notamment:
● des composants électroniques, tels que des circuits intégrés (par exemple d'un type similaire à la famille ST19 de STMicroelectronics ou à la famille SLE66 d'Infineon) qui peuvent notamment être intégrés dans des cartes à puces,
● des cartes à puces proprement dites, telles que par exemple: une carte bancaire, un porte monnaie électronique (par exemple d'un type similaire au porte monnaie électronique français Monéo), une carte santé, une carte SIM (compris par abus de langage dans un sens général pouvant comprendre tout autre type de carte à puce utilisée pour authentifier un utilisateur à un réseau de téléphonie mobile, telle qu'un UICC pour téléphonie 3G, généralement dénommé USIM, ou une R-UIM ou plus récemment CSIM pour téléphonie CDMA), une carte de transport sans contact (par exemple d'un type similaire à une carte Navigo utilisée pour accéder au réseau RATP et SNCF en île de France), ou encore un badge d'accès PKI à un réseau d'entreprise,
● des documents électroniques sécurisés (qui peuvent éventuellement prendre la forme d'une carte à puce) tels qu'un passeport électronique, un visa électronique, un tachographe électronique, une carte d'identité électronique, ou encore un permis de conduire électronique,
● des TPM (trusted plaftorm module), utilisés notamment pour sécuriser le fonctionnement de dispositifs tels que des ordinateurs ou des téléphones portables en s'assurant par exemple que les différentes parties (processeur, mémoire, disque dur, logiciels, etc.) du dispositif à sécuriser sont authentiques,
● des "tokens", tels que des tokens OTP (dispositifs délivrant des mots de passe à usage unique appelés OTP pour One Time Password, dont le calcul peut s'appuyer sur de la cryptographie asymétrique et notamment sur la méthode de chiffrement / déchiffrement selon l'invention), ou des clés USB comprenant une fonction cryptographique, cette fonction pouvant être fournie par un circuit intégré du type de celui que l'on trouve dans les cartes à puces. Une clé USB peut comprendre également une fonction OTP, en ayant par exemple un petit écran LCD à même d'afficher l'OTP. Les clés USB sont dans certains contextes considérées comme plus pratiques que les cartes à puce, car, tout en comprenant des fonctions équivalentes, elles ne nécessitent pas de lecteur de carte à puce pour être connectées à un hôte USB (tel qu'un PC). En réalité, il peut s'agir dans les deux cas de la même puce de sécurité (intégrée respectivement dans un corps de carte à puce et dans une clé USB), mais la clé USB comprend en plus la fonction lecteur de carte à puce, ce qui peut éviter d'avoir à acheter un lecteur de carte à puce et d'avoir à installer un driver pour ce lecteur dans l'hôte USB accueillant la clé USB. Certaines clés USB comprennent, en plus de la fonction de sécurisation fournie par une puce de sécurité, une grande capacité de stockage annexe (elles peuvent par exemple comprendre un composant flash de plusieurs giga octets). Dans ce cas, la puce de sécurité (qui ne dispose que de peu de mémoire non volatile et réinscriptible) constitue elle-même un DSMC, qui peut notamment avoir pour vocation de protéger le contenu du composant de stockage annexe (e.g. Flash) de la clé USB. La mémoire non volatile et réinscriptible de la puce de sécurité est généralement très différente de la mémoire annexe, même lorsqu'elle utilise la même technologie (par exemple la technologie Flash). En effet, la mémoire de la puce de sécurité est typiquement protégée. Elle peut par exemple être redondante et chiffrée, et mettre en oeuvre de nombreuses contremesures, et elle est en tout état de cause sous le contrôle direct de la puce de sécurité. En revanche, le composant de mémoire annexe n'est généralement pas protégé par des dispositifs électroniques internes particuliers, et il est typiquement raccordé à la puce de sécurité par des connections (par exemple par des fils électriques, par du câblage imprimé, ou par des vias qui sont des trous conducteurs traversant un PCB) qui sont généralement accessibles à un attaquant qui démonterait la clé USB. La puce de sécurité n'ayant pas nécessairement moyen de savoir si la connexion réalisée entre elle et le composant de mémoire annexe est sécurisée, et notamment elle ne peut généralement pas exclure qu'un attaquant se soit connecté entre elle et le composant de mémoire annexe (par exemple en plaçant des sondes sur les connections de façon à espionner les communications), le niveau de sécurité du composant de mémoire annexe est du point de vue de la puce de sécurité inférieur au niveau de sécurité de sa propre mémoire, qui est par contre de taille limitée. En particulier, il ne serait généralement pas souhaitable de stocker des clefs privées très sensibles dans le composant de mémoire annexe, et il est généralement préférable de les conserver dans la puce de sécurité, qui est plus apte à les protéger. Il serait envisageable que la puce de sécurité enregistre certaines données sensibles dans le composant de mémoire annexe en ayant préalablement chiffré ces données sensibles. Cependant, ces données sensibles seraient alors potentiellement accessibles sous forme chiffrée à un attaquant (alors qu'elles peuvent a priori être rendues inaccessible ou du moins très difficilement accessibles lorsqu'elles sont enregistrées dans la mémoire de la puce de sécurité). Il n'y a pas de différence si le chiffrement employé est sûr, mais s'il s'avère que quelqu'un réussit à craquer l'algorithme de chiffrement utilisé, alors on se rend compte qu'il y a une différence éventuelle entre les niveaux de sécurités des deux enregistrements. Celui de la mémoire du composant de mémoire annexe sera éventuellement accessible et donc éventuellement craqué, alors que celui de la mémoire de la puce de sécurité nécessiterait d'abord de concevoir une attaque physique pour récupérer l'enregistrement.

L'invention concerne également un procédé de cryptographie à clef publique sans certificat. Contrairement au schéma de l'état de l'art qui permet d'utiliser n'importe quel schéma de type IBE et n'importe quel schéma de type PKE, le procédé de l'invention requiert l'utilisation du schéma de Gentry comme schéma IBE, et du schéma de Cramer-Shoup comme schéma PKE. Afin de réduire les capacités mémoire requises par un dispositif électronique mettant en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup. Le procédé s'appuie de préférence sur des moyens permettant de limiter la taille des messages chiffrés, ce qui permet notamment d'implémenter (ou d'implémenter plus aisément) les opérations de chiffrement au sein d'un DSMC selon l'invention. Les caractéristiques des procédés, des DSMC implémentant lesdits procédés et des systèmes électroniques implémentant lesdits procédés sont décrits ci-dessous, ensemble, afin de ne pas les répéter trois fois. Le DSMC peut être un dispositif à logique câblée qui peut avoir été conçu totalement sur mesure pour une tâche donnée, ou peut s'appuyer sur des technologies connues telles que par exemple:
● ASIC (pour Application-Specific Integrated Circuit), on développe alors typiquement un circuit électronique en utilisant un langage de description (tel que VHDL, Verilog ou encore SystemC), qui est ensuite compilé par synthèse logique pour produire automatiquement le dessin du circuit,
● FGPA (field-programmable gate array, réseau de portes programmables in situ),
● PLD (programmable logic device, circuit logique programmable),
● EPLD (erasable programmable logic device, circuit logique programmable et effaçable),
● CPLD (complex programmable logic device, circuit logique programmable complexe), ou encore
● PAL ou PLA (programmable array logic / programmable logic array, réseau logique programmable).

Dans ce cas le procédé (du moins les parties pertinentes du procédé) selon l'invention est de préférence "câblé en dur" au sein du DSMC. Le DSMC peut également être programmable et comprendre un processeur (le procédé selon l'invention pouvant alors prendre la forme d'un logiciel chargé dans le DSMC). Le DSMC peut également comprendre à la fois de la logique câblée et un processeur (par exemple un composant de la famille ST19 de STMicroelectronics comprend à la fois un microcontrôleur et un ASIC permettant de développer des fonctions spécifiques), la logique câblée pouvant être utilisée pour les tâches les plus gourmandes en ressources CPU et qui peuvent être optimisées par une implémentation matérielle plutôt que logicielle. Le DSMC a vocation à être utilisé essentiellement pour le déchiffrement de messages et pour la génération de paires de clés selon le schéma de Cramer-Shoup, cependant dans certains cas il est envisageable d'implémenter d'autres parties du procédé selon l'invention (en particulier le chiffrement). Implémenter le chiffrement peut être avantageux lorsque le DSMC est utilisé dans un terminal qui ne dispose pas des logiciels cryptographiques adaptés pour effectuer le chiffrement, dans ce cas le DSMC fonctionne d'une certaine manière comme un cryptoprocesseur. La sécurité ne s'en trouve pas nécessairement améliorée, si le message à chiffrer est de toute façon disponible dans le terminal. Le DSMC peut également implémenter l'opération de chiffrement afin de mettre en oeuvre des protocoles dans lesquels le DSMC chiffre des informations qu'il a lui-même générées (nombre aléatoire, etc.), ou qui lui ont été transmises de manière sécurisée, dans ce cas le chiffrement au sein du DSMC accroît la sécurité par rapport à un chiffrement extérieur au DSMC, et plus particulièrement par rapport à un chiffrement au sein d'un terminal non sécurisé auquel le DSMC pourrait être connecté. Il est envisageable qu'un DSMC implémente la totalité du procédé. Par exemple, on pourrait envisager un service d'échanges sécurisés au sein d'un petit groupe d'utilisateurs. Par exemple, une équipe travaillant sur un projet donné, ou une famille pourrait souhaiter communiquer de façon sûre sans avoir à s'inscrire auprès d'un tiers et risquer de divulguer des informations. Chaque membre de la famille ou de l'équipe peut être équipé d'un DSMC (par exemple une carte SIM, puisque presque tout le monde en a une). Le DSMC d'un des membres (par exemple le chef de l'équipe, l'un des parents, ou la personne la plus à l'aise avec ce type de technologie) pourrait implémenter la totalité du procédé, à savoir la génération d'une paire de clés maîtres, la génération d'une clef privée partielle pour chaque utilisateur (membre de la famille ou de l'équipe), ainsi que, de façon similaire aux autres DSMC (ceux des autres membres de la famille ou de l'équipe), la génération d'une paire de clefs selon le schéma de Cramer-Shoup pour le porteur du DSMC, la faculté de déchiffrer des messages, et éventuellement la faculté de chiffrer les messages. La personne dont le DSMC a généré les clés privées partielles n'est pas pour autant en mesure de déchiffrer les messages des autres membres du groupe si elle n'est pas elle-même destinataire.

Le procédé de l'invention est également utilisable de façon plus générale au sein de tout système électronique, et permet à ce système électronique d'économiser de la mémoire, ce qui peut être avantageux dans certains cas. Par exemple un système électronique dont l'une des tâches essentielles serait de sauvegarder un grand nombre de données chiffrées (par exemple une base de données sécurisée) peut mettre en oeuvre le procédé selon l'invention afin de réduire fortement ses besoins de stockage. Le système électronique peut comprendre un ensemble de dispositifs électroniques distincts, connecté entre eux, ou reliés entre eux par un réseau (filaire, hertzien, etc.), au moins l'un des dispositifs électroniques mettant en oeuvre au moins une partie du procédé selon l'invention. Il peut s'agir notamment d'un système électronique consistant en une infrastructure pouvant par exemple comprendre de manière non limitative:
● Un serveur dénommé "autorité de confiance", servant à générer et éventuellement à stocker pour chaque utilisateur une clef privée partielle, selon le procédé de l'invention, la clef privée partielle étant obtenue à partir de l'identité de l'utilisateur et du couple (mpk,msk) généré en utilisant l'algorithme de génération de clef maître du schéma IBE. Ce serveur d'autorité de confiance peut éventuellement lui-même comprendre un HSM afin d'accroître la sécurité, le HSM pouvant servir par exemple à générer et stocker les clefs privées partielles pour le compte du serveur d'autorité de confiance,
● un serveur RA (Registration Authority) connecté au server CA, servant à enregistrer les utilisateurs,
● un serveur de répertoire pour recenser les utilisateurs du système électronique en stockant leurs identités. Ce serveur de répertoire peut par exemple être de type similaire aux serveurs LDAP ou ActiveDirectory,
● un serveur web permettant par exemple aux utilisateurs d'administrer leurs clefs (en particulier des clefs selon le procédé de l'invention) via un portail dédié,
● des serveurs applicatifs, pour des applications sécurisées par le procédé selon l'invention. Il peut s'agir par exemple de messagerie électronique chiffrée par le procédé selon l'invention, de bases de données auxquels les utilisateurs peuvent s'authentifier, les données de la base de données pouvant être chiffrées en tout ou partie, par le procédé selon l'invention,
● une multitude de dispositifs sécurisés tels que par exemple des DSMC (il peut par exemple s'agir de cartes à puces, telles que des SIM de téléphones portables), un dispositif sécurisé étant par exemple associé à un utilisateur, et pouvant par exemple générer et stocker une paire de clefs (pkid, skid) selon le schéma PKE, dans le procédé selon l'invention, et mettre en oeuvre les tâches de chiffrement et déchiffrement selon le procédé de l'invention.

Le procédé selon l'invention est notamment et préférentiellement utilisable dans des systèmes électroniques sécurisés, tels que des systèmes comprenant par exemple:
● des ordinateurs protégés, typiquement équipés de protections matérielles (par exemple TPM et/ou lecteur d'empreintes digitales et/ou lecteur de cartes à puces, etc.) et/ou logicielles (telles que des antivirus, antispyware, anti-trojan, firewall personnel, et autres logiciels de protection à jour), et administrés selon les règles de l'art, et/ou
● des serveurs sécurisés, tels que des firewalls, des serveurs VPN (Virtual Private Network), des serveurs d'authentification, des accélérateurs SSL (Secure Socket Layer), des serveurs d'autorité de certification, etc., et/ou
● des HSM (Hardware Security Module), à savoir un boîtier très protégé permettant de générer des clefs cryptographiques, et comportant notamment des détecteurs d'intrusions conduisant typiquement à la destruction de toutes les clefs en cas de tentative d'ouverture, de déplacement, de vibration anormale, de température anormale, d'humidité anormale, de rayonnement anormal, etc.

Le procédé de l'invention peut également être utilisé au sein de tout système électronique, même non protégé, tel qu'un ordinateur personnel standard connecté à Internet, mais ne comprenant aucun logiciel de sécurité (antivirus, etc.) ou des logiciels de sécurité périmés, un téléphone portable ou un PDA (personal digital assistant) programmables sans protection, etc. Cependant, il est généralement recommandé d'utiliser un système protégé pour la mise en oeuvre du procédé selon l'invention qui est un procédé sensible.

Selon un mode de réalisation préféré, le procédé de l'invention repose sur l'utilisation d'un ensemble mathématique noté G possédant une structure de groupe (notation multiplicative), sur lequel il existe une opération de couplage notée e. Un tel groupe et une telle opération de couplage existent sur des ensembles mathématiques appelés courbes elliptiques, pour des paramètres bien choisis. Les opérations de couplage ("pairing" en anglais) sur courbes elliptiques sont détaillées notamment dans le document "Identity based encryption from the Weil pairing" D. Boneh et M. Franklin (http://crypto.stanford.edu/~dabo/abstracts/ibe.html) ainsi que dans WO/2005/125085, "CHIP CARD READER, SYSTEM AND METHOD OF PERFORMING A PAIRING OPERATION ON AN ELLIPTIC CURVE". Nous notons GT le groupe auquel appartient le résultat de l'opération de couplage. Nous notons g un élément générateur du groupe G. On note p le nombre d'éléments du groupe G. Le procédé de l'invention fonctionne par exemple de la manière suivante:
● Génération de la clef maître: générer un entier aléatoire α modulo p (c'est-à-dire compris entre 0 et p-1 ) et calculer g₁=g^α. Générer 3 éléments aléatoires h₁, h₂ et h₃ dans le groupe G privé de g. La clef publique maître est mpk=(g,g₁,h₁,h₂,h₃)_{.} La clef privée maître est msk= α. Cette clef maître est typiquement générée au sein d'un serveur d'autorité de confiance.
● Génération d'une clef privée partielle pour l'identité id où id est un entier compris entre 0 et p-1:
   soient rid₁, rid₂ et rid₃ trois entiers aléatoires modulo p. La clef privée partielle est:
      pskid=(rid₁, hid₁, rid₂, hid₂, rid₃, hid₃)
         avec hidᵢ=(hᵢ*g^(-rid))^(1/(α-id))

La génération de la clef privée partielle est typiquement effectuée au sein d'un serveur d'autorité de confiance pour le compte de l'utilisateur dont l'identité est id, et cette clé lui est transmise de façon sécurisée. La génération implique la connaissance de la clef privée maître et ne peut donc généralement être effectuée sous le seul contrôle de l'utilisateur qui n'a pas accès à cette clef privée maître.
● Génération du couple clef publique/clef privée: vérifier éventuellement que h₃ est différent de g (il est censé l'être par construction). Cette vérification peut présenter un intérêt dans la mesure où l'entité qui génère le couple clef publique/clef privée n'est en général pas la même que celle qui génère h₃. Générer deux éléments aléatoires S₁ et S₂ dans le groupe GT. Générer aléatoirement les entiers X₁, X₂, Y₁, Y₂ et Z modulo p, et calculer:
   C=S₁^X₁*S₂^X₂
   d=S₁^Y₁*S₂^Y₂
   t=S₁^Z

La clef publique est alors pkid=(S₁, S₂, C, d, t), et la clef privée correspondant est skid=(X₁, X₂, Y₁, Y₂, z)

La génération de cette paire de clefs (pkid,skid) est typiquement effectuée par l'ordinateur de l'utilisateur (au sens large, c'est-à-dire qu'il peut s'agir par exemple de son téléphone portable ou de son PDA, qui sont aujourd'hui de véritables ordinateurs), voire par un dispositif sécurisé dédié, que l'utilisateur connecte à son ordinateur (par exemple un DSMC tel qu'une une carte à puce), l'utilisation d'un dispositif sécurisé dédié étant plus sûre et donc préférée (afin d'éviter qu'un hacker ayant piraté l'ordinateur parvienne à extraire la clé privée). La clé publique pkid peut être transmise par son détenteur aux personnes intéressées ou publiée (par exemple sur un serveur de type LDAP ou ActiveDirectory).
● Chiffrement d'un message m à destination l'identité id avec la clef publique pkid: étant donné un message m appartenant au group GT, générer deux entiers aléatoires r et s modulo p. Le message chiffré est alors calculé de la façon suivante:
   C₁=g₁^S *g^(-s*id)
   C₂= e(g,g)^s
   C₃= S₁^r
   C₄= S₂^r
   C₅= m*t^r*e(g,h₁)^(-s)
   β=H(C₁,C₂,C₃,C₄,C₅)
   C₆=c^r*d^(r*β)
   δ=H(c1,c2,c3,c4,c5,c6)
   C₇=e(g,h₂)^s*e(g,h₃)^(s*δ)

Le message chiffré qui est renvoyé est alors:
C=(c₁,c₂,c₃,c₄,c₅,c₆,c₇)

La fonction H est une fonction de hachage, on peut par exemple utiliser la fonction SHA-1, ou encore une des variantes de la famille SHA-2 (qui est plus sécurisée), telle que SHA-224, SHA-256, SHA-384 ou SHA-512. Les anciens algorithmes tels que MD2, MD4 ou MD5 sont possibles bien que déconseillés compte tenu de leur plus faible sécurité. Le procédé de chiffrement proposé est typiquement réalisé à l'aide de l'ordinateur de l'utilisateur émetteur du message. Si l'émetteur détient un dispositif sécurisé tel qu'un DSMC, le message peut être transmis de l'ordinateur de l'émetteur à ce dispositif sécurisé, qui peut mettre en oeuvre les étapes de chiffrement décrites ci-dessus. Les clés pkid, id et mpk utilisées sont des clés publiques (les clés publiques du destinataire du message), et bien que le message m soit par hypothèse sensible (sinon il ne serait a priori pas chiffré), ce message m est la plupart du temps créé dans l'ordinateur de l'utilisateur émetteur, ou du moins se trouve à un moment ou à un autre dans cet ordinateur. Le procédé de chiffrement peut donc en règle générale être exécuté dans l'ordinateur sans pour autant compromettre la sécurité. Cependant si le message provient du DSMC lui-même ou lui a été transmis de manière sécurisée, il est fortement recommandé d'effectuer le procédé de chiffrement au sein du DSMC afin de garantir un niveau de sécurité acceptable. On se rend compte que selon ce mode de réalisation préféré, on a un facteur d'expansion de 7, qui est bien moindre que le facteur 16 de l'état de l'art.
● Déchiffrement: étant donné un chiffré C=(c₁,c₂,c₃,c₄,c_{S},c₆,c₇), calculer β=H(c₁,c₂,c₃,c₄,c₅) et δ=H(c₁,c₂,c₃,c₄,c₅,c₆), H étant la fonction de hachage utilisée lors du chiffrement (voir ci-dessus). Tester si les deux conditions suivantes sont réalisées:
   C₃^(x₁+y₁*β)*c₄^(x₂+y₂*β)=c₆
   e(c₁, hid₂*hid₃^δ)*c₂^δ)*(rid₂+rid₃*δ)=c₇

Si ces deux conditions sont réalisées ("signature" valide), calculer:
m=c₅*e(c₁,hid₁)*c2rid₁*C₃^(-z)

La variable m contient alors le message déchiffré.

Ce procédé de déchiffrement est de préférence réalisé à l'aide d'un dispositif sécurisé tel qu'un DSMC (carte à puce, etc.), en effet il implique l'utilisation de clés privées très sensibles (pskid et skid). Le récepteur du message stocke donc de préférence ces clés privées dans un dispositif sécurisé, et ce dispositif sécurisé est de préférence en charge de l'opération de déchiffrement, qui se conclut en général par l'envoi du message déchiffré à l'ordinateur (au sens large) de l'utilisateur. Il est cependant techniquement envisageable de se contenter d'installer un logiciel exécutant l'algorithme de déchiffrement ci-dessus dans l'ordinateur du récepteur, quel que soit le niveau de sécurité de cet ordinateur, sans recourir à un DSMC. Cela implique simplement de mettre les clés privées à disposition de l'ordinateur, et peut exposer au risque qu'un pirate parvienne à les récupérer.

On peut démontrer que le procédé préféré décrit ci-dessus permet d'atteindre le plus haut niveau de sécurité pour un schéma de chiffrement à clef publique sans certificat.

Un avantage du procédé selon l'invention est que le message chiffré est plus court que dans le procédé de chiffrement à clef publique sans certificat décrit dans le rapport 2007/095 référencé plus haut (avec le mode de réalisation préféré, le message chiffré est 16/7 soit environ 2,29 fois plus compact). Cela permet une plus grande efficacité dans la transmission des messages chiffrés. Un autre avantage du procédé de l'invention par rapport au procédé décrit dans le rapport 2007/95 est qu'il ne nécessite pas l'utilisation d'un schéma à signature unique.

## Revendications

1. Procédé de cryptographie à clef publique sans certificat, reposant sur un schéma de chiffrement à clef publique basé sur l'identité dit IBE, un schéma de chiffrement à clef publique traditionnel, **caractérisée en ce que**, afin de réduire les capacités mémoire requises par un dispositif électronique mettant en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup.

2. Procédé selon la revendication 1, comprenant la génération d'une paire de clefs maîtres selon le schéma de Gentry, le schéma de Gentry utilisant un groupe G avec p éléments et de générateur g, ladite génération comprenant les étapes suivantes:
a. génération d'un entier aléatoire α modulo p,
b. calcul de g₁=g^α,
c. génération de 3 éléments aléatoires h₁, h₂ et h₃ dans le groupe G privé de g,
d. définition de la clef publique maître par mpk=(g,g₁,h₁,h₂,h₃) et de la clef privée maître par msk=α.

3. Procédé selon la revendication 1 ou 2, comprenant la génération, selon le schéma de Gentry, d'une clef privée partielle pskid pour une identité id, id étant un entier compris entre 0 et p-1, une clef publique maître mpk=(g,g₁,h₁,h₂,h₃) et une clef privée maître msk=α étant données, le schéma de Gentry utilisant un groupe G avec p éléments et de générateur g, la génération de la clé privée partielle pskid comprenant les étapes suivantes:
a. génération de trois entiers aléatoires rid₁, rid₂ et rid₃ modulo p,
b. calcul de hid_{¡}=(h_{¡}*g^(-rid_{¡}))^(1/(α-id)) pour i=1,2,3,
c. définition de la clef privée partielle par pskid=(rid₁, hid₁, rid₂, hid₂, rid₃, hid₃)

4. Procédé selon l'une des revendications précédentes, comprenant la génération d'une paire de clefs selon le schéma de Cramer-Shoup, ladite génération comprenant les étapes suivantes:
a. génération de deux éléments aléatoires S₁ et S₂ dans un groupe GT.
b. génération aléatoire de cinq entiers x₁, x₂, y₁, y₂ et z modulo p, et calcul des éléments:
c. c=s₁^x₁*s₂^x₂
d. d=s₁^y₁*s₂^y₂
e. t=s₁^z
f. définition de la clef publique par pkid=(s₁, s₂, c, d, t), et de la clef privée correspondante par skid=(x₁, x₂, y₁, y₂, z)

5. Procédé selon la revendication 4, dans lequel, étant donnée une clef publique maître mpk=(g,g₁,h₁,h₂,h₃), une étape préliminaire consiste à vérifier que h3 est différent de g, et ne poursuivre la méthode que si c'est bien le cas.

6. Procédé selon l'une des revendications précédentes, comprenant le chiffrement d'un message, procédé dans lequel, étant données une clef publique maître mpk=(g,g₁,h₁,h₂,h₃) et une clef publique pkid=(s1, s2, c, d, t), le schéma de Gentry utilisant un groupe G avec p éléments et de générateur g, le groupe G étant muni d'une opération de couplage e, le chiffrement à destination d'un utilisateur
a. dont l'identité est id, id étant un entier compris enter 0 et p-1, et
b. qui détient la clef privée correspondant à clef la publique pkid,
d'un message m appartenant à un groupe GT, comprend les étapes suivantes:
c. génération de deux entiers aléatoires r et s modulo p,
d. calcul des éléments suivants
i. c₁= g₁^ₛ *g^(-s*id)
ii. c₂= e(g,g)^s
iii. c₃= s₁^r
iv. C₄= S₂^r
v. c₅= m*t^r*e(g,h₁)^(-s)
vi. β=H(c₁,c₂,c₃,c₄,c₅), où H est une fonction de hachage
vii. c₆=c^r*d^(r*β)
viii. δ=H(c₁,c₂,c₃,c₄,c₅,c₆)
ix. c7=e(g,h₂)^s*e(g,h₃)^(s*δ)
e. définition du message chiffré par C=(c₁,c₂,c₃,c₄,c₅,c₆,c₇).

7. Procédé selon l'une des revendications précédentes, comprenant le déchiffrement d'un message, procédé dans lequel, étant donnés un message chiffré C=(c₁,c₂,c₃,c₄,c₅,c₆,c₇), une clef privée partielle pskid=(rid₁, hid₁, rid₂, hid₂, rid₃, hid₃), une clef privée skid=(x₁, x₂, y₁, y₂, z) et une fonction de hachage H utilisée lors de la création du message chiffré C, le schéma de Gentry utilisant un groupe G avec p éléments et de générateur g, le groupe G étant muni d'une opération de couplage e, le déchiffrement du message chiffré C comprend les étapes suivantes:
a. calcul de β=H(c₁,c₂,c₃,c₄,c₅) et δ=H(c₁,c₂,c₃,c₄,c₅,c₆),
b. vérification des deux conditions suivantes:
i. C₃^(x₁+y₁*β)*c₄^(x₂+y₂*β)=c₆
ii. e(c₁, hid₂*hid₃^δ)*c₂^(rid₂+rid₃*δ)=c₇
c. calcul du message déchiffré m=c₅*e(c₁,hid₁)*c₂^rid₁*c₃^(-z)

8. Système électronique mettant en oeuvre un procédé de cryptographie à clef publique sans certificat, le procédé reposant sur
a. un schéma de chiffrement à clef publique basé sur l'identité dit IBE et
b. un schéma de chiffrement à clef publique traditionnel **caractérisé en ce que**, afin de réduire les capacités mémoire requises par le système électronique pour mettre en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup.

9. Dispositif sécurisé à mémoire contrainte mettant en oeuvre un procédé de cryptographie à clef publique sans certificat, le procédé reposant sur
a. un schéma de chiffrement à clef publique basé sur l'identité dit IBE et
b. un schéma de chiffrement à clef publique traditionnel **caractérisé en ce que**, afin de réduire les capacités mémoire requises par le dispositif sécurisé à mémoire contrainte pour mettre en oeuvre le procédé, le procédé combine avec une redondance réduite, c'est-à-dire avec un facteur d'expansion inférieur à 16, le schéma IBE de Gentry et le schéma de chiffrement à clef publique traditionnel de Cramer-Shoup.
